# EUROPÄISCHE PATENTSCHRIFT

(11) **EP 2 227 942 B1**
(45) Veröffentlichungstag und Bekanntmachung des Hinweises auf die Patenterteilung: **30.05.2012**
(21) Anmeldenummer: 09154782.8
(22) Anmeldetag: 10.03.2009
(51) Int. Cl.: A01G 25/02, B29C 47/02

(54) **Vorrichtung zur Herstellung eines Tropfbewässerungsrohres**
Method for producing a drip watering pipe
Dispositif destiné à la fabrication d'un tuyau d'irrigation goutte à goutte

(43) Veröffentlichungstag der Anmeldung: 15.09.2010
(73) Patentinhaber: THE Machines Yvonand SA, 1462 Yvonand (CH)
(72) Erfinder: Kertscher, Eberhard, 1462, Yvonand (CH)
(74) Vertreter: BOVARD AG

(56) Entgegenhaltungen:
- EP-A- 0 715 926
- EP-A- 1 403 025
- EP-A- 1 541 014
- US-A- 5 324 371

## Beschreibung

Die vorliegende Erfindung bezieht sich auf eine Vorrichtung zur Herstellung eines Tropfbewässerungsrohres, umfassend eine Extrusionsvorrichtung zur Extrudierung eines Rohrkörpers aus einem thermoplastischen Kunststoff, eine Einrichtung zum Einführen von Dosierelementen in den extrudierten Rohrkörper und zum Anpressen und Verbinden der Dosierelemente im Rohrkörper, Kalibriereinrichtungen zur Kalibrierung des extrudierten Rohrkörpers auf die gewünschte Aussenform, Kühlvorrichtungen zur Kühlung des extrudierten Rohrkörpers mit Kühlmitteln und eine Bohreinrichtung zum Anbringen von Auslassöffnungen für das Wasser im Bereich der Dosierelemente.

Derartige Tropfbewässerungsrohre werden insbesondere zur gezielten direkten Bewässerung von Pflanzen in Pflanzkulturen verwendet. Diese Tropfbewässerungsrohre können im Bereich der Pflanzen oberflächlich oder im Erdreich versenkt ausgelegt werden, im Bereich der einzelnen Pflanzen können ein oder mehrere Dosierelemente angeordnet sein, mittels welchen ermöglicht wird, dass das Wasser durch eine in der Wandung des Rohres angebrachte Bohrung tröpfenweise austreten kann. Mit einer Bewässerung mit derartigen Tropfbewässerungsrohren kann das Wasser sehr sparsam und effizient eingesetzt werden.

Vorrichtungen zur Herstellung von derartigen Tropfbewässerungsrohren sind in vielfältiger Weise bekannt. So ist beispielsweise in der EP A 0 715 926 eine Vorrichtung zur Herstellung von Tropfbewässerungsrohren dargestellt, bei welcher ein Rohrkörper durch eine Extrusionsvorrichtung extrudiert wird. Dieser extrudierte Rohrkörper wird auf den gewünschten Durchmesser kalibriert und gekühlt. In den Rohrkörper eingeschoben werden die Dosierelemente, die an die Wandung des Rohres angepresst und mit diesen verschweisst werden. Der mit diesen Dosierelementen versehene Rohrkörper gelangt in eine Bohreinrichtung, in welcher die Rohrwandung im Bereich der Dosierelemente jeweils mit einer durchgehenden Bohrung versehen wird, durch welche das Wasser beim Bewässerungsvorgang, dosiert durch das Dosierelemente, tröpfenweise austreten kann. Danach kann das so hergestellte Tropfbewässerungsrohr für den Weitertransport beispielsweise auf einer Wickelvorrichtung aufgewickelt werden.

Bei der Herstellung von derartigen Tropfbewässerungsrohren muss das Anbringen der Auslassöffnungen für das Wasser durch die Bohreinrichtung bezüglich des entsprechenden Dosierelementes in genauer Position erfolgen. Bei der oben beschriebenen bekannten Vorrichtung wird die Bohrung der Auslassöffnung im Rohrkörper nach dem Durchlaufen der Kühlvorrichtungen ausgeführt. Dies bedeutet, dass dieser Arbeitsvorgang relativ lange nach dem Einbringen der Dosierelemente in den extrudierten Rohrkörper und der Verbindung dieser Dosierelemente mit der Wandung des Rohrkörpers erfolgt. Insbesondere bei dickwandigeren Rohren lässt sich die Position des jeweiligen Dosierelementes innerhalb des Rohrkörpers in einfacher Weise durch die Überwachung des Anpressdruckes der Rolle an die Aussenseite der Rohrwandung im Bereich des Verbindens des Dosierelementes mit der Wandung oder deren Ausweichbewegung beim Durchlauf eines Dosierelementes ermitteln. Ein entsprechendes Signal wird an die Bohreinrichtung abgegeben, das Ausüben der Bohrung erfolgt aber zeitverzögert, abhängig von der Durchlaufgeschwindigkeit des Rohrkörpers und von der Distanz zwischen Bohreinrichtung und Anpressrolle, wobei sich hier Fehler ergeben können, beispielsweise durch eine Längenänderung des Rohrkörpers infolge höherer Zugbeanspruchung.

Ferner wird die Bohrung im völlig ausgehärteten und ausgekühlten Rohkörper angebracht.

Die Aufgabe der vorliegenden Erfindung besteht nunmehr darin, eine Vorrichtung zur Herstellung eines Tropfbewässerungsrohres so auszugestalten, dass die Bohrung bezüglich des Dosierelementes möglichst genau positioniert werden kann, und dass die Bohrung mit einem möglichst geringen Energieaufwand ausgeführt werden kann.

Erfindungsgemäss erfolgt die Lösung dieser Aufgabe dadurch, dass die Einrichtung zum Anpressen und Verbinden der Dosierelemente im Rohrkörper in einer Vorkühlkammer angeordnet ist, dass nach der Vorkühlkammer eine weitere Kammer angeordnet ist, in welcher die Bohreinrichtung angeordnet ist, dass nach der weiteren Kammer die Hauptkühlkammer angeordnet ist und dass zwischen der weiteren Kammer und der Hauptkühlkammer die Kalibriervorrichtung eingesetzt ist.

Mit dieser erfindungsgemässen Ausgestaltung erhält man eine Vorrichtung, bei welcher der Abstand vom Feststellen der Position der Dosierelemente innerhalb des Rohrkörpers durch die Anpressrolle zur Bohreinrichtung möglichst gering gehalten werden kann. Der an der Bohreinrichtung vorbeigeführte Rohrkörper wird in der Vorkühlkammer nur wenig abgekühlt, beim Durchlauf dieses Rohrkörpers durch die Bohreinrichtung weist dieser eine noch relativ hohe Temperatur auf, die Festigkeit des Rohrkörpermaterials ist demzufolge ebenfalls noch gering. Beim Verwenden einer Laserbohreinrichtungen zum Anbringen der Bohrung im Rohrkörper ist somit der Energiebedarf kleiner, da die Schmelztemperatur des Materials des Rohrkörpers im Bereich des Laserstrahls sehr schnell erreicht werden kann.

In vorteilhafter Weise sind die Eintrittsöffnung und die Austrittsöffnung der Vorkühlkammer für den Rohrkörper jeweils mit einer Dichtung ausgestattet. Dadurch wird der Austritt von Wasser aus der Vorkühlkammer im Bereich der Eintrittsöffnung und der Austrittsöffnung gering gehalten.

In vorteilhafter Weise ist zum Auffangen des durch die Eintrittsöffnung austretenden Kühlmittels aus der Vorkühlkammer ein Auffangbecken angeordnet, und ist die Zwischenkammer zum Ableiten des durch die Austrittsöffnung eindringenden Kühlmittels mit einem Abfluss versehen. Das austretende Kühlmittel kann somit gesammelt und in den Kreislauf zurückgeleitet werden.

Eine weitere vorteilhafte Ausgestaltung der Erfindung besteht darin, dass die Anpressung der Dosierelemente an der Innenseite der Wandung des Rohrkörpers durch eine Führungsbahn, auf welcher die Dosierelemente in den Rohrkörper zuführbar sind, und eine an die Aussenseite des Rohrkörpers anpressbare Rolle erfolgt. Die Rolle ist hierbei mit einem Sensor ausgestattet, welcher beim Anheben der Rolle bei Durchlauf eines Dosierelementes ein Signal an eine Steuereinheit abgibt, welche ihrerseits ein Signal an die Bohreinrichtung abgibt. Dadurch erhält man einen einfachen Aufbau der Vorrichtung.

In vorteilhafter Weise ist in der weiteren Kammer eine Absaugeinrichtung angeordnet, durch welche die in der weiteren Kammer durch die Laserbohrung entstehenden Dämpfe und Gase abgesaugt werden können.

In vorteilhafter Weise ist in der Kühlkammer hinsichtlich des Umgebungsdrucks ein Unterdruck angelegt, wodurch vermieden wird, dass der Rohrkörper in diesem Bereich in sich zusammengedrückt wird.

Eine Ausführungsform der erfindungsgemässen Vorrichtung zur Herstellung eines Tropfbewässerungsrohres wird nachfolgend anhand der beiliegenden Zeichnung beispielhaft näher erläutert.

Es zeigt
Fig. 1 in schematischer Darstellung die erfindungsgemässe Vorrichtung zur Herstellung eines Tropfbewässerungsrohres; und
Fig. 2 in schematischer Darstellung eine Schnittansicht durch die Extrusionsvorrichtung, die Vorkühlkammer und die weitere Kammer, in welcher die Bohreinrichtung angeordnet ist.

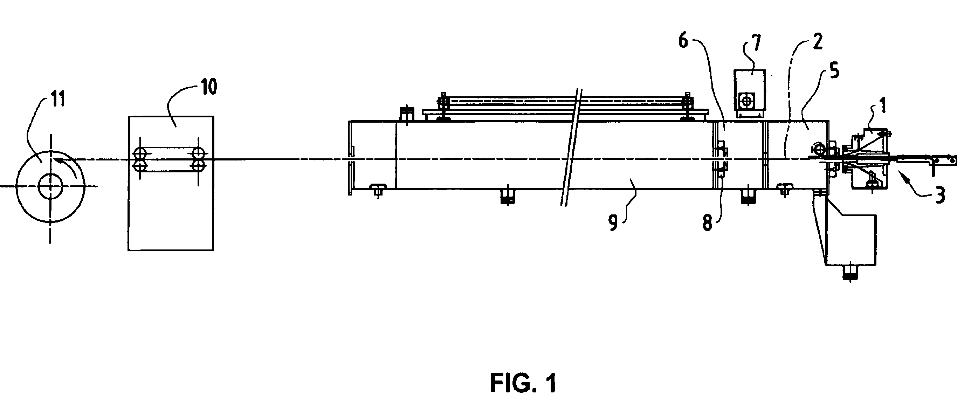

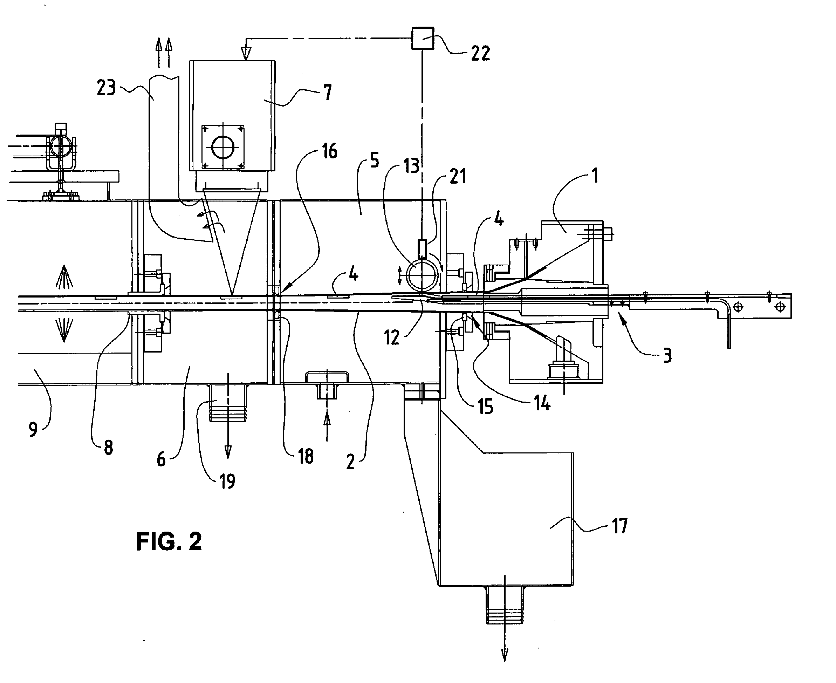

Fig. 1 zeigt schematisch den Aufbau der Vorrichtung zur Herstellung von Tropfbewässerungsrohren. In einer Extrusionsvorrichtung 1 wird in bekannter Weise ein Rohrkörper 2 (Fig. 2) extrudiert, wobei das Material aus einem thermoplastischen Kunststoff besteht. Diese Extrudierung des Rohrkörpers erfolgt kontinuierlich. Über eine Einrichtung 3 zum Einführen von Dosierelementen 4 (Fig. 2) werden diese in bekannter Weise in den extrudierten Rohrkörper eingeführt, wo diese in kontinuierlichem Abstand an die innere Wandung des extrudierten Rohrkörpers 2 angepresst und mit diesem verbunden werden. Der extrudierte Rohrkörper 2 mit den darin eingesetzten Dosierelementen 4 durchläuft eine Vorkühlkammer 5, in welcher der Rohrkörper vorgekühlt wird. Hinter der Vorkühlkammer ist eine weitere Kammer 6 angeordnet, in welcher ihrerseits eine Bohreinrichtung 7 angeordnet ist. In dieser weiteren Kammer 6 wird über die Bohreinrichtung die jeweilige Auslassöffnung im Bereich des entsprechenden Dosierelementes angebracht.

Aus der weiteren Kammer 6 gelangt der Rohrkörper über eine Kalibriereinrichtung 8 in eine Hauptkühlkammer 9, in welcher der Rohrkörper vollständig abgekühlt wird. Hinter der Hauptkühlkammer 9 ist eine Zieheinrichtung 10 vorgesehen, mittels welcher der Rohrkörper 2 aus der Hauptkühlkammer 9 herausgezogen wird und in einer Wickelvorrichtung 11 zu Wickelrollen aufgewickelt wird. Das fertige Tropfbewässerungsrohr kann dann in Form von Wickelrollen an den jeweiligen Einsatzort transportiert werden.

Wie aus Fig. 2 ersichtlich ist, werden die Dosierelemente 4 über eine Führungsbahn 12 an die Innenseite des Rohrkörpers 2 herangeführt und in Kontakt gebracht. An der Aussenseite des Rohrkörpers 2 ist in diesem Bereich eine anpressbare Rolle 13 angeordnet. Zwischen der Führungsbahn 12 und der Rolle 13 werden die Dosierelemente 4 an die Innenseite der Wandung des Rohrkörpers 2 angepresst und mit diesem, da dieser sich noch in einem sehr weichen Zustand befindet, in bekannter Weise verschweisst. Die Verbindungen zwischen Dosierelementen 4 und dem Rohrkörper 2, die durch die Führungsbahn 12 und die Rolle 13 ausgeführt werden, erfolgen innerhalb der Vorkühlkammer 5. Die Eintrittsöffnung 14, durch welche der Rohrkörper 2 nach dem Extrusionsvorgang in die Vorkühlkammer 5 gelangt, ist mit einer Lippendichtung 15 abgedichtet.

In die Vorkühlkammer 5 wird in bekannter Weise ein Kühlmittel zugeführt, das hier aus Wasser besteht, wobei dieses Wasser in die Vorkühlkammer 5 eingeflutet oder eingesprüht werden kann, abhängig von der gewünschten Kühlleistung. Das durch die Eintrittsöffnung 14 gegebenenfalls austretende Wasser wird durch einen Auffangbehälter 17 aufgefangen, das hier aufgefangene Wasser kann dem Kühlkreislauf der Vorrichtung zum Herstellen von Tropfbewässerungsrohren in bekannter Weise wieder zugeführt werden.

Nach dem Durchlaufen der Vorkühlkammer 5 gelangt der Rohrkörper 2 mit den eingesetzten Dosierelementen 4 über die Austrittsöffnung 16 in eine weitere Kammer 6, die hinter der Vorkühlkammer 5 angeordnet ist. Die Austrittsöffnung 16 ist ebenfalls mit einer Lippendichtung 18 abgedichtet, um die von der Vorkühlkammer 5 in die weitere Kammer 6 gelangende Wassermenge möglichst gering zu halten. Das trotzdem in die weitere Kammer 6 gelangende Wasser wird über den Abfluss 19 ebenfalls wieder dem Kühlkreislauf zugeführt.

Nach dem Durchlauf der weiteren Kammer 6 gelangt der Rohrkörper über eine Kalibriereinrichtung 20, in welcher dem Rohrkörper die genaue Aussenkontur verpasst wird, in die Hauptkühlkammer 9, in welcher der Rohrkörper 2 vollständig abgekühlt wird und, wie aus Fig. 1 ersichtlich ist, danach aufgewickelt wird.

In der weiteren Kammer 6 ist die Bohreinrichtung 7 angeordnet. Diese Bohreinrichtung 7 ist in bekannter Weise als Laserbohreinrichtung ausgebildet. Mit dieser Laserbohreinrichtung 7 werden in bekannter Weise die Auslassöffnungen in den Rohrkörper gebohrt, diese Auslassöffnungen befinden sich in genau positionierter Lage bezüglich der Dosierelemente 4.

Um die Auslassöffnungen an der genauen Position im Rohrkörper 2 anbringen zu können, ist die anpressbare Rolle 13 mit einem Sensor 21 ausgestattet. Während des Durchlaufens eines Dosierelementes 4 zwischen der Führungsbahn 12, die fix angeordnet ist, und der gegenüber liegenden anpressbaren Rolle 13 wird die Rolle 13 entgegen der Anpresskraft geringfügig angehoben, was durch den Sensor 21 festgestellt wird und was zu einer Abgabe eines Signals an eine Steuereinrichtung 22 führt. Die Steuereinrichtung 22 aktiviert über ein Signal die Bohreinrichtung 7, um einen Laserstrahl abzugeben, wobei dieses Signal um die Zeit verzögert ist, welche ein Dosierelement braucht, um den Weg von der Rolle 13 bis zum Bohrvorgang zurückzulegen. Dadurch ist gewährleistet, dass der Bohrvorgang an der genau richtigen Position bezüglich des Dosierelementes 4 im Rohrkörper 2 ausgeführt wird. Die Strecke zwischen Rolle 13 und Bohrvorgang ist sehr gering, Längenänderungen des Rohrkörpers finden auf dieser Strecke praktisch keine statt, die Genauigkeit zum Anbringen der Bohrung an der richtigen Stelle im Rohrkörper 2 ist gewährleistet.

In der Vorkühlkammer 5 wird der extrudierte Rohrkörper 2 um ein geringes Mass abgekühlt. Die Abkühlung soll lediglich so gross sein, dass der Rohrkörper zum Weiterleiten aus der Vorkühlkammer 5 durch die weiteren Kammer 6 in die Hauptkühlkammer 9 korrekt erfolgen kann. Im Bereich der Kammer 6, wo die Bohrung in Rohrkörper 2 angebracht wird, hat der Rohrkörper 2 noch eine Temperatur, die nur wenig unter der Schmelztemperatur des entsprechenden Materials liegt. Beim Bohrvorgang durch die Laserbohrvorrichtung wird das Material des Rohrkörpers geschmolzen, da die Schmelztemperatur aus den vorgängig beschriebenen Gründen sehr schnell erreicht werden kann, kann ein Laserstrahl mit geringer Energie ausgestrahlt werden, wodurch sich eine entsprechende Energieeinsparung ergibt.

In die weitere Kammer 6 ist eine Absaugeinrichtung 23 eingesetzt, mittels welcher die in der weiteren Kammer 6 die beim Bohrvorgang entstehenden Dämpfe und Gase abgesaugt werden können.

Die Lippendichtungen 15 und 18 an der Eintrittsöffnung 14 bzw. der Austrittsöffnung 16 der Vorkühlkammer 5 sind so weich gestaltet, dass sie keine Verformung des durchlaufenden Rohrkörpers 2 und keine Veränderung der Oberfläche des Rohrkörpers 2 zur Folge haben.

In bekannter Weise wird in der Hauptkühlkammer 9 hinsichtlich des Umgebungsdrucks ein Unterdruck angelegt. Damit wird vermieden, dass der Rohrkörper 2 innerhalb der Hauptkühlkammer 9 durch den Druck des Kühlmittels in sich zusammenfallen könnte. Durch diesen Unterdruck tritt im Bereich der Dosierelemente durch die Auslassöffnung Luft aus, die hier austretende Luftmenge ist wegen der Dosierelemente sehr gering und hat demzufolge keinen Einfluss auf die Formhaltung des Rohrkörpers 2.

Mit dieser erfindungsgemässen Vorrichtung zur Herstellung eines Tropfbewässerungsrohres werden somit einerseits die Bohrvorgänge zum Anbringen der Auslassöffnungen an der genau richtigen Position im Rohrkörper ausgeführt, durch die Anordnung der Bohreinrichtung vor der Hauptkühlkammer, also bevor der Rohrkörper vollständig abgekühlt wird, lässt sich auch eine entsprechende Energieeinsparung für den Bohrvorgang erreichen.

## Patentansprüche

1. Vorrichtung zur Herstellung eines Tropfbewässerungsrohres, umfassend eine Extrusionsvorrichtung (1) zur Extrudierung eines Rohrkörpers (2) aus einem thermoplastischen Kunststoff, eine Einrichtung (3) zum Einführen von Dosierelementen (4) in den extrudierten Rohrkörper (2) und zum Anpressen und Verbinden der Dosierelemente (4) im Rohrkörper (2), Kalibriereinrichtungen (8) zur Kalibrierung des extrudierten Rohrkörpers (2) auf die gewünschte Aussenform, Kühlvorrichtungen (5, 9) zur Kühlung des extrudierten Rohrkörpers (2) mit Kühlmitteln und eine Bohreinrichtung (7) zum Anbringen von Auslassöffnungen für das Wasser im Bereich der Dosierelemente (4), **dadurch gekennzeichnet, dass** die Einrichtung zum Anpressen und Verbinden der Dosierelemente (4) im Rohrkörper (2) in einer Vorkühlkammer (5) angeordnet ist, dass nach der Vorkühlkammer (5) eine weitere Kammer (6) angeordnet ist, in welcher die Bohreinrichtung (7) angeordnet ist, dass nach der weiteren Kammer (6) die Hauptkühlkammer (9) angeordnet ist und dass zwischen der weiteren Kammer (6) und der Hauptkühlkammer (9) die Kalibriervorrichtung (8) eingesetzt ist.

2. Vorrichtung nach Anspruch 1, **dadurch gekennzeichnet, dass** die Eintrittsöffnung (14) und die Austrittsöffnung (16) der Vorkühlkammer (5) für den Rohrkörper (2) jeweils mit einer Dichtung (15, 18) ausgestattet ist.

3. Vorrichtung nach Anspruch 2, **dadurch gekennzeichnet, dass** zum Auffangen des durch die Eintrittsöffnung (14) austretenden Kühlmittels aus der Vorkühlkammer (5) ein Auffangbecken (17) angeordnet ist und dass die weitere Kammer (6) zum Ableiten des durch die Austrittsöffnung (16) eindringenden Kühlmittels mit einem Abfluss (19) versehen ist.

4. Vorrichtung nach einem der Ansprüche 1 bis 3, **dadurch gekennzeichnet, dass** die Anpressung der Dosierelemente (4) an der Innenseite der Wandung des Rohrkörpers (2) durch eine Führungsbahn (12), auf welcher die Dosierelemente (4) in den Rohrkörper (2) zuführbar sind, und eine an die Aussenseite des Rohrkörpers (2) anpressbare Rolle (13) erfolgt.

5. Vorrichtung nach Anspruch 4, **dadurch gekennzeichnet, dass** die Rolle (13) mit einem Sensor (21) ausgestattet ist, welcher beim Anheben der Rolle (13) bei Durchlauf eines Dosierelementes (4) ein Signal an eine Steuereinheit (22) abgibt, welche ihrerseits ein Signal an die Bohreinrichtung (7) abgibt.

6. Vorrichtung nach einem der Ansprüche 1 bis 5, **dadurch gekennzeichnet, dass** die Bohreinrichtung (7) als Laserbohreinrichtung ausgebildet ist.

7. Vorrichtung nach Anspruch 6, **dadurch gekennzeichnet, dass** in der weiteren Kammer (6) eine Absaugeinrichtung (23) angeordnet ist.

8. Vorrichtung nach einem der Ansprüche 1 bis 7, **dadurch gekennzeichnet, dass** in der Hauptkühlkammer (9) hinsichtlich des Umgebungsdrucks ein Unterdruck angelegt ist.

## Claims

1. Device for producing a drip irrigation tube, comprising an extrusion apparatus (1) for extrusion of a tube body (2) made of a thermoplastic synthetic material, a device (3) for inserting metering elements (4) in the extruded tube body (2) and for pressing and connecting the metering elements (4) in the tube body (2), sizing devices (8) for adjusting the extruded tube body (2) to the desired outer shape, cooling devices (5, 9) for cooling of the extruded tube body (2) with coolant, and a drilling device (7) for making outlet holes for the water in the vicinity of the metering elements (4), **characterised in that** the device for pressing and connecting the metering elements (4) in the tube body (2) is disposed in a pre-cooling chamber (5), a further chamber (6) is disposed following the pre-cooling chamber (5), in which further chamber the drilling device (7) is disposed, the main cooling chamber (9) is disposed after the further chamber (6), and inserted between the further chamber (6) and the main cooling chamber (9) is the sizing device (8).

2. Device according to claim 1, **characterised in that** the inlet (14) and the outlet (16) of the pre-cooling chamber (5) for the tube body (2) is provided in each case with a seal (15, 18).

3. Device according to claim 2, **characterised in that** a collecting vessel (17) is disposed to collect the coolant escaping through the inlet (14) from the pre-cooling chamber (5), and the further chamber (6) is provided with a drain (19) to drain off the coolant escaping through the outlet (16).

4. Device according to one of the claims 1 to 3, **characterised in that** the pressing of the metering elements (4) on the inner side of the walling of the tube body (2) takes place using a guideway (12), on which the metering elements (4) are able to be led into the tube body (2), and a roller (13), able to be pressed on the outside of the tube body (2).

5. Device according to claim 4, **characterised in that** the roller (13) is provided with a sensor (21) which emits a signal to a control unit (22), upon lifting of the roller (13) during passage of a metering element (4), which control unit, for its part, emits a signal to the drilling device (7).

6. Device according to one of the claims 1 to 5, **characterised in that** the drilling device (7) is designed as laser drilling device.

7. Device according to claim 6, **characterised in that** a suction device (23) is disposed in the further chamber (6).

8. Device according to one of the claims 1 to 7, **characterised in that** a low pressure with respect to ambient pressure is applied in the main cooling chamber (9).

## Revendications

1. Dispositif pour la fabrication d'un tuyau d'irrigation goutte à goutte, comprenant un dispositif d'extrusion (1) pour l'extrusion d'un corps tubulaire (2) réalisé en un matériau synthétique thermoplastique, un dispositif (3) pour insérer des éléments de dosage (4) dans le corps tubulaire extrudé (2) et pour presser et connecter les éléments de dosage (4) dans le corps tubulaire (2), des dispositifs de calibration (8) pour calibrer le corps tubulaire extrudé (2) selon la forme extérieure désirée, des dispositifs de refroidissement (5, 9) pour refroidir le corps tubulaire extrudé (2) avec un réfrigérant, et un dispositif de perçage (7) pour réaliser des orifices de sortie pour l'eau dans la zone des éléments de dosage (4), **caractérisé en ce que** le dispositif pour presser et connecter les éléments de dosage (4) dans le corps tubulaire (2) est agencé dans une chambre de prérefroidissement (5), qu'une autre chambre (6) est agencée en aval de ladite chambre de prérefroidissement (5), autre chambre dans laquelle ledit dispositif de perçage (7) est agencé, que ladite chambre de refroidissement principale (9) est agencée an aval de ladite autre chambre (6), et que le dispositif de calibration (8) est inséré entre ladite autre chambre (6) et ladite chambre de refroidissement principale (9).

2. Dispositif selon la revendication 1, **caractérisé en ce que** l'entrée (14) et la sortie (16) de ladite chambre de prérefroidissement (5) pour le corps tubulaire (2) est munie, dans chaque cas, d'un joint d'étanchéité (15, 18).

3. Dispositif selon la revendication 2, **caractérisé en ce qu'**un bassin collecteur (17) est agencé pour recueillir le réfrigérant s'échappant par ladite entrée (14) de ladite chambre de prérefroidissement (5), et que ladite autre chambre (6) est munie d'un dispositif de drainage (19) pour drainer le réfrigérant s'échappant par ladite sortie (16).

4. Dispositif selon l'une des revendications 1 à 3, **caractérisé en ce que** le pressage des éléments de dosage (4) contre le côté intérieur de la paroi du corps tubulaire (2) s'effectue en utilisant une voie de guidage (12) sur laquelle les éléments de dosage (4) sont à même d'être amenés dans le corps tubulaire (2), et un galet (13) susceptible d'être pressé contre le côté extérieur du corps tubulaire (2).

5. Dispositif selon la revendication 4, **caractérisé en ce que** le galet (13) est muni d'un capteur (21) qui émet un signal vers une unité de commande (22) lorsque ledit galet est soulevé (13) lors du passage d'un élément de dosage (4), unité de commande qui, pour sa part, émet un signal vers le dispositif de perçage (7).

6. Dispositif selon l'une des revendications 1 à 5, **caractérisé en ce que** ledit dispositif de perçage (7) est réalisé en tant que dispositif de perçage au laser.

7. Dispositif selon la revendication 6, **caractérisé en ce qu'**un dispositif d'aspiration (23) est agencé dans ladite autre chambre (6).

8. Dispositif selon l'une des revendications 1 à 7, **caractérisé en ce qu'**on applique, dans la chambre de refroidissement principale (9), une dépression par rapport à la pression ambiante.
